# EUROPÄISCHE PATENTSCHRIFT

(11) **EP 3 218 908 B1**
(45) Veröffentlichungstag und Bekanntmachung des Hinweises auf die Patenterteilung: **25.03.2020**
(21) Anmeldenummer: 15802034.7
(22) Anmeldetag: 25.11.2015
(51) Int. Cl.: H01B 3/00

(54) **GLIMMSCHUTZMATERIAL MIT EINSTELLBAREM WIDERSTAND**
CORONA SHIELDING MATERIAL WITH AN ADJUSTABLE RESISTANCE
MATÉRIAU DE PROTECTION ANTI-EFFLUVES À RÉSISTANCE RÉGLABLE

(30) Priorität: 16.12.2014 DE 102014226097
(43) Veröffentlichungstag der Anmeldung: 20.09.2017
(73) Patentinhaber: Siemens Aktiengesellschaft, 80333 München (DE)
(72) Erfinder: LANG, Steffen, 91352 Hallerndorf (DE); STAUBACH, Christian, 45768 Marl (DE); PLOCHMANN, Bastian, 91413 Neustadt an der Aisch (DE); POHLMANN, Friedhelm, 45355 Essen (DE)
(86) Internationale Anmeldenummer: PCT/EP2015/077609
(87) Internationale Veröffentlichungsnummer: WO 2016/096342

(56) Entgegenhaltungen:
- EP-A1- 2 645 540
- FLORIAN SENN: "Nonlinear resistivity characteristics of end corona protection systems for rotating high voltage machines ; Charakterisierung der nichtlinearen Widerstandseigenschaften von Endenglimmschutzsystemen rotierender Hochspannungsmaschinen", E & I ELEKTROTECHNIK UND INFORMATIONSTECHNIK, SPRINGER-VERLAG, VIENNA, Bd. 129, Nr. 5, 13. September 2012 (2012-09-13), Seiten 306-313, XP035119701, ISSN: 1613-7620, DOI: 10.1007/S00502-012-0031-2

## Beschreibung

Die Erfindung betrifft einen Glimmschutzmaterial mit einstellbarem Widerstand, insbesondere für ein Glimmschutzsystem, das ein Endenglimmschutzsystem (EGS) umfasst.

Um Teilentladungen zu vermeiden, wird die Hauptisolierung von Generatorwicklungsstäben oder ähnlichen Betriebsmitteln, die bei allen elektrischen Maschinen mit höherer Bemessungsspannung, also beispielsweise bei Betriebsspannungen im kV-Bereich, insbesondere größer 3,3kV-Bereich, vorkommen, mit einer inneren und einer äußeren Leitschicht gegen Hohlräume und Ablösungen abgeschirmt. Ein derartiges Glimmschutzsystem umfasst zumindest einen Außenglimmschutz (AGS) und eine innere Potentialsteuerung (IPS). Die elektrische Feldstärke wird in der Hauptisolierung ausgehend von der IPS in radialer Richtung bis zum AGS abgebaut. Am Ende des Generatorwicklungsstabes, im Bereich der Austrittsstelle der Wicklungsstäbe aus dem Ständerblechpaket, endet der AGS während die Hauptisolierung in Richtung Stabende weitergeführt wird.

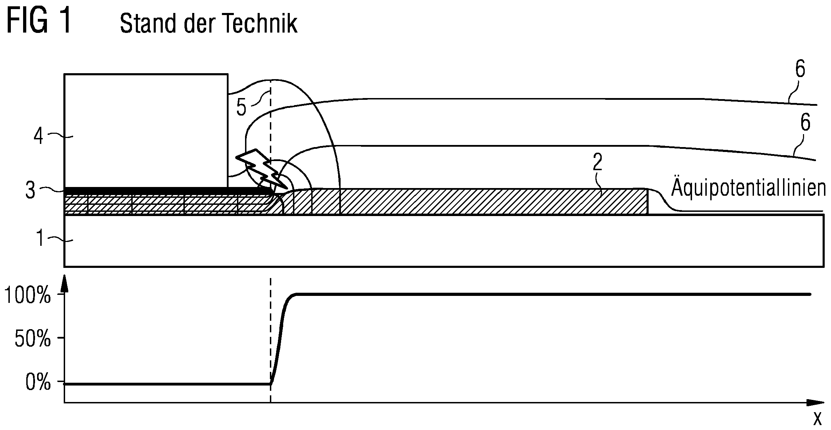

So ist beispielsweise eine Gleitanordnung z.B. eines Trafos, einer Durchführung und/oder eines Kabels mit niedriger Teilentladungseinsetzspannung aufgebaut. Figur 1 zeigt diesen Stand der Technik, wobei eine im Querschnitt Gleitanordnung am Ende eines Generatorwicklungsstabes ohne EGS mit skizziertem nichtlinearen Potentialabbau schematisch dargestellt ist. Zu erkennen ist unten im Bild die Graphik mit dem Potentialverlauf, darüber der Kupferleiter 1 an den die Hauptisolation 2 anschließt. Zwischen der Hauptisolation 2 und dem geerdeten Blechpaket 4 liegt der Außenglimmschutz (AGS) 3. Die Linien 6 zeigen den Feldlinienverlauf der an der Kante 5 des AGS 3. Die größte Feldstärke tritt am Ende /an der Kante 5 des AGS auf.
Zu erkennen ist, dass der Potentialverlauf an der Oberfläche der Hauptisolation über die Länge des Kupferleiters 1 ohne Endenglimmschutz neben der radialen auch eine starke nichtlineare tangentiale Komponente parallel zur Isolierstoffoberfläche / Grenzfläche hat.

Das elektrische Feld hat wie gezeigt in dem Bereich neben der radialen auch eine starke nichtlineare tangentiale Komponente parallel zur Isolierstoffoberfläche / Grenzfläche. Die größte Feldstärke dieser Feld-Komponente tritt am Ende und/oder an der Kante des AGS 3 oder allgemein am Ende der äußeren Leitschicht auf. Daher ist es für einen optimierten Glimmschutz erforderlich, für eine Feldsteuerung an der Kante des AGS und für eine Festigkeits-Erhöhung in der Umgebung der freiliegenden Hauptisolierung zu sorgen.

Dies wird üblicherweise durch die Herstellung eines Endenglimmschutzes (EGS) bewerkstelligt. EP2645540 beschreibt Glimmschutzmaterialien welche aus einer polymeren Harzmatrix und SiC600 als Füllstoff (75 gew.%) aufgebaut sind.

Als Glimmschutz werden im Stand der Technik im allgemeinen Gewebe- oder Fließbänder aus Glas oder Polymerwerkstoff, wie beispielsweise Polyester, eingesetzt, die mit einem füllstoffhaltigen Bindemittel getränkt sind.

Bei einer Einzelstab-Tränkung werden teilweise auch füllstoffhaltige Anstriche verwendet. Beim AGS, also beispielsweise im Nutbereich werden als elektrisch leitfähige Füllstoffe in der Regel Ruß oder Graphit, beim EGS, also beispielsweise im Wickelkopfbereich, elektrisch halbleitendes Siliziumcarbid als Füllstoffe eingesetzt.

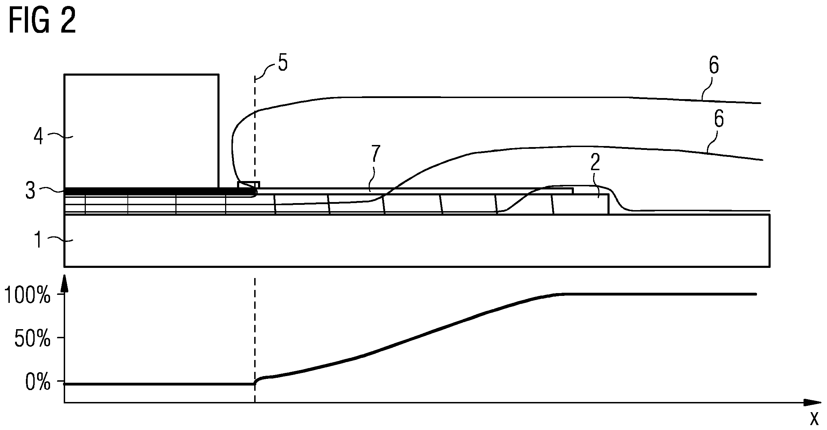

Neuerdings werden zur Unterdrückung von Gleitentladungen resistive Potentialsteuerungen durch halbleitende Lacke oder Bänder vorwiegend auf der Basis von Siliziumcarbid oder anderen elektrisch halbleitenden Füllstoffen eingesetzt. Durch den Endenglimmschutz wird der tangentiale Potenzialabbau entlang der Isolierstoffoberfläche vergleichmäßigt. Idealerweise wird der Potentialabbau durch das EGS sogar linearisiert. Dies wird erreicht, wenn pro Längeneinheit immer der gleiche Spannungsbetrag abfällt. Hierfür wird ein in axialer Richtung ortsabhängiger und spannungsabhängiger Widerstandsbelag eingesetzt, wie in Figur 2 gezeigt.

Figur 2 zeigt die gleiche Gleitanordnung wie Figur 1 nur mit einem Endenglimmschutz (EGS) 7 am Ende eines Generatorwicklungsstabes. Dabei ist wieder unten im Bild der Potentialverlauf an der Oberfläche der Hauptisolation über die Kupferleiterlänge zu erkennen. Sowohl der Potentialverlauf als auch der Feldlinienverlauf sind durch den EGS vergleichmäßigt.

Die Höhe eines spannungsabhängigen Widerstandsbelages im EGS ist von einer Vielzahl von Faktoren abhängig, als Beispiel ist die Bemessungsspannung des Generators zu erwähnen. Um die jeweils für die einzelne Maschine angepassten Widerstandsbereiche zu realisieren, wird, teilweise in aufwändigen Verfahren, das Siliziumcarbid mittels chemischer Prozesse dotiert, damit der elektrische Widerstandsbelag des EGS auf den an den jeweiligen Auftragungsort möglichst exakt passende Widerstände hat.

Nachteilig ist zum einen die aufwändige Dotierung zur Einstellung des elektrischen Widerstands, und zum zweiten, dass verschiedene Partikelgrößen zur Einstellung eines gewünschten Widerstands im EGS eingesetzt werden. Eine Partikelmischung mit verschiedenen Partikelgrößen ist allerdings nicht besonders lagerstabil, weil sie sich wegen der unterschiedlichen Partikelgrößen leicht entmischt. In der Praxis wird daher auf die Mischung verzichtet, da es zu aufwändig und daher zu teuer wäre die Mischungen zu stabil zu lagern. Man hat beispielsweise 4 Füllstoffe mit unterschiedlicher Fraktionsgröße und jeweiliger Dotierung. Damit kann man punktuell Widerstandsbeläge herstellen, die die relevanten Bereiche abdecken.

Deshalb ist es Aufgabe der vorliegenden Erfindung, einen Widerstandsbelag für ein Glimmschutzsystem mit einem Füllstoff zu schaffen, bei dem der Widerstand exakt, kosteneffektiv und leicht einstellbar ist.

Diese Aufgabe wird durch den Gegenstand der vorliegenden Erfindung, wie er in der Beschreibung, den Figuren und den Ansprüchen offenbart wird, gelöst.

Dementsprechend ist Gegenstand der vorliegenden Erfindung ein Glimmschutzmaterial das eine Matrix und Füllstoff umfasst, wobei der Füllstoff als Abmischung von dotierten und undotierten SiC-Partikel der gleichen Partikelgrößenverteilung vorliegt und der Widerstand im Glimmschutzmaterial durch die Menge an dotierten Partikel in der Abmischung einstellbar ist.

Allgemeine Erkenntnis der vorliegenden Erfindung ist es, dass der Widerstand im Glimmschutzmaterial durch den Füllstoff beeinflusst wird, wobei bislang der gewünschte Widerstand zum einen durch verschiedene Partikelgrößen und zum anderen durch verschiedene Konzentrationen an dotierten Partikel im Glimmschutzmaterial hergestellt wurde. Gemäß der Erfindung wurde erkannt, dass allein mit einer Partikelgröße an Füllstoffpartikel, allein durch Variation der Konzentration an dotierten Partikel innerhalb der Fraktion ein Widerstand im Glimmschutzmaterial einstellbar ist.

Geeigneterweise ist der Füllstoff mit Partikeln mit Abmessungen von, zumindest im (insbesondere arithmetischen) Mittel, also einer Partikelgrößenverteilung, von höchstens einem Millimeter und vorzugsweise von, zumindest im (insbesondere arithmetischen) Mittel, höchstens 100 Mikrometern gebildet. Zweckmäßig umfasst der Füllstoff teilladungsresistente und elektrisch leitfähige und/oder halbleitende Partikel aus Silizumcarbid. Geeigneterweise umfassen die Partikel einen teilladungsresistenten Kern und eine teilladungsresistente Beschichtung, welche leitfähig ist.

Geeigneterweise umfasst bei dem erfindungsgemäßen Glimmschutzsystem der Füllstoff globulare und/oder planare Partikel. Insbesondere sind unter globularen Partikeln solche Partikel zu verstehen, bei welchen sich die Abmessungen in verschiedenen Raumrichtungen um weniger als einen Faktor von höchstens 3, zweckmäßig höchstens 1.5, unterscheiden. Zweckmäßigerweise sind unter planaren Partikeln solche Partikel zu verstehen, deren Abmessung sich in zumindest einer Raumrichtung um einen Faktor von zumindest 3, vorzugsweise zumindest 5, von den Abmessungen in einer, vorzugsweise zwei, dazu senkrechten Richtungen unterscheidet.

Durch das gezielte Abmischen von dotierten und undotierten Füllstoffpartikel gleicher Partikelgrößenverteilung ist es möglich, einen Widerstandsbereich von mehr als einer Dekade abzudecken, wenn die Partikelmischungen in eine entsprechende Matrix eingearbeitet werden.

Dabei ist es vorteilhaft, wenn der Füllstoff im Glimmschutzmaterial in einer Menge von mehr als 40Gew%, insbesondere mehr als 50Gew%, bevorzugt in einer Menge von mehr als 70 Gew% und ganz besonders bevorzugt in einer Menge von mehr als 80 Gew% vorliegt.

Der Widerstand im Glimmschutzmaterial sinkt mit steigendem Gehalt an dotiertem Füllstoff. Durch Abmischen des dotierten und undotierten Füllstoffs kann ein für die Feldsteuerung einer elektrischen Maschine maßgeschneideter Widerstand eingestellt werden.

Als Füllstoff-Fraktionen werden beispielsweise die am Markt üblichen Partikelgrößen, die beispielsweise als SiC400, SiC600, SiC800 und SiC1000 gehandelt werden, eingesetzt. Dabei bedeutet die Zahl hinter der Materialbezeichnung "SiC" für Siliziumcarbid die Partikelanzahl je Flächeneinheit. Dadurch ergibt sich, dass SiC400 größere Partikel beschreibt als SiC1000.

Mit steigender Größe der Partikelfraktion, also durchschnittlich größeren Partikeln, wird ein niedrigerer Widerstand im Glimmschutzmaterial erzeugt und umgekehrt. Das erklärt sich durch die Anzahl an Kontaktwiderständen zwischen zwei Partikeln, wobei diese Anzahl mit kleineren Partikeln steigt und dadurch der resultierende Widerstand.

Um den geforderten Widerstandsbereich eines Glimmschutzsystems wie eines Endenglimmschutzsystems abzudecken, werden beispielsweise Partikelgrößen wie SiC400, SiC600, SiC800 und SiC1000 eingesetzt. Bei SiC1000 beispielsweise liegen die Abmessungen der Partikel im Mittelwert bei ca. 40pm, mit einem Minimum von ca. 4 µm und einem Maximum von ca. 50 µm.

Für den Anfangsbereich wird SiC beispielsweise auch teilweise mit Ruß abgemischt, um den Widerstand zu erniedrigen.

Die Dotierung der Partikel erfolgt beispielsweise mit Aluminium oder Bor.

Das Glimmschutzsystem umfasst beispielsweise neben dem Glimmschutzmaterial noch einen Träger wie ein Band und/oder ein Gewebe. In einer besonders bevorzugten Weiterbildung der Erfindung bildet bei dem Glimmschutzsystem zumindest ein Teil des Glimmschutzmaterials ein Band und/oder einen Lack.

Das Glimmschutzmaterial umfasst eine Matrix beispielsweise eine polymere Matrix, insbesondere eine Kunststoffmatrix und/oder ein Harz. Zweckmäßigerweise ist die polymere Matrix ein Thermoplast und/oder ein Duromer und/oder ein Elastomer.

In einer bevorzugten Weiterbildung des erfindungsgemäßen Glimmschutzsystems weist das Glimmschutzmaterial einen umso geringeren elektrischen Widerstand auf, je stärker ein elektrisches Betriebsfeld der elektrischen Maschine ist, in welchem das Glimmschutzmaterial, insbesondere im Betrieb, befindlich ist.

Gemäß der Erfindung können allein durch zwei Füllstofffraktionen EGS-Glimmschutzmaterialien hergestellt werden, die 2 Dekaden an Widerständen abdecken.

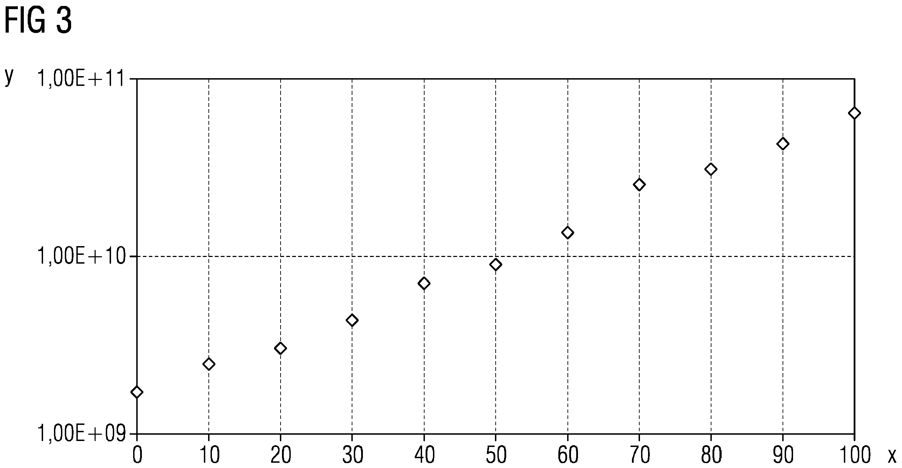

Als Figur 3 wird eine Kurve gezeigt, in der die Masseanteile an dotiertem SiC im Partikelgemisch eines Glimmschutzmaterials gegen den Quadratwiderstand in Ohm aufgetragen ist. Es zeigt sich ein innerhalb der Messgenauigkeiten linearer Verlauf mit ansteigendem Anteil an undotierten SiC im Partikelgemisch steigt auch der Widerstand in Ohm. Hier wird eindeutig gezeigt, dass der elektrische Widerstand gemäß der Erfindung in Nuancen exakt einstellbar ist.

Vorteilhaft ist insbesondere die Einstellung des Widerstandes in elektrischen Nuancen, also beispielsweise kann durch Variation der Menge an dotierten Partikel praktisch jeder gewünschte Widerstands-Wert im Glimmschutzmaterial eingestellt werden.

Zudem sind die eingestellten Mischungen praktisch unbegrenzt lagerstabil, weil durch die grundsätzliche Einheitlichkeit der Partikelgröße keine Entmischung in größere und kleinere Partikelfraktionen während einer längeren Lagerung auftreten kann. Somit ergibt sich ein reproduzierbarer elektrischer Widerstandsbelag.

Die Erfindung betrifft einen Glimmschutzmaterial, insbesondere für ein Glimmschutzsystem, das ein Endenglimmschutzsystem (EGS) umfasst. Dabei wird ein Glimmschutzmaterial vorgestellt, bei dem der Füllstoff in einer einzigen Partikelgrößenfraktion, eingebettet in eine Matrix, vorliegt und dennoch die Einstellung eines gewünschten elektrischen Widerstands realisierbar ist.

## Patentansprüche

1. Glimmschutzmaterial eine Matrix und Füllstoff umfassend, wobei der Füllstoff als Abmischung von dotierten und undotierten SiC-Partikel der gleichen Partikelgrößenverteilung vorliegt und der Widerstand im Glimmschutzmaterial durch die Menge an dotierten Partikel in der Abmischung einstellbar ist.

2. Glimmschutzmaterial nach einem der Ansprüche 1, wobei die SiC-Partikel in einer Partikelgröße von SiC1000, SiC800, SiC600 oder SiC400 vorliegen.

3. Glimmschutzmaterial nach einem der vorstehenden Ansprüche, wobei als Matrix eine polymere Harzmatrix vorliegt.

4. Glimmschutzmaterial nach einem der vorstehenden Ansprüche, wobei der Füllstoff in einer Konzentration von über 40Gew% vorliegt.

5. Glimmschutzmaterial nach einem der vorstehenden Ansprüche, wobei der Füllstoff globular vorliegt.

6. Glimmschutzmaterial nach einem der vorstehenden Ansprüche, das Teil eines Endenglimmschutzsystems ist.

7. Elektrische Maschine mit einem Glimmschutzsystem, wobei im Glimmschutzsystem ein Glimmschutzmaterial nach einem der vorstehenden Ansprüche 1 bis 6 umfasst ist.

8. Elektrische Maschine nach Anspruch 7, die eine Hochspannungsmaschine ist.

9. Elektrische Maschine nach einem der Ansprüche 7 oder 8, die ein Glimmschutzsystem zur Vermeidung von Teilentladungen hat, wobei das Glimmschutzsystem eine innere Potentialsteuerung und/oder einen Außenglimmschutz kombiniert mit einem Endenglimmschutz hat.

## Claims

1. Corona shielding material comprising a matrix and filler, wherein the filler is present as a blend of doped and undoped SiC particles of the same particle size distribution and the resistance in the corona shielding material can be set by the quantity of doped particles in the blend.

2. Corona shielding material according to Claim 1, wherein the SiC particles are present in a particle size of SiC1000, SiC800, SiC600 or SiC400.

3. Corona shielding material according to either of the preceding claims, wherein the matrix present is a polymeric resin matrix.

4. Corona shielding material according to one of the preceding claims, wherein the filler is present in a concentration of above 40% by weight.

5. Corona shielding material according to one of the preceding claims, wherein the filler is present in globular form.

6. Corona shielding material according to one of the preceding claims, which is part of an overhang corona shielding system.

7. Electrical machine comprising a corona shielding system, wherein a corona shielding material according to one of the preceding Claims 1 to 6 is included in the corona shielding system.

8. Electrical machine according to Claim 7, which is a high-voltage machine.

9. Electrical machine according to either of Claims 7 and 8, which has a corona shielding system for preventing partial discharges, wherein the corona shielding system has an inner potential grading and/or an external corona shielding combined with an overhang corona shielding.

## Revendications

1. Matériau de protection anti-effluves comprenant une matrice et une matière de charge, dans lequel la matière de charge est sous forme d'un mélange de particules de SiC dopées et non dopées ayant la même distribution granulométrique et la résistance dans le matériau de protection anti-effluves est réglable par la quantité de particules dopées dans le mélange.

2. Matériau de protection anti-effluves selon la revendication 1, dans lequel les particules de SiC ont une taille de particule correspondant à SiC 1000, SiC 800, SiC 600 ou SiC 400.

3. Matériau de protection anti-effluves selon l'une des revendications précédentes, dans lequel la matrice est une matrice de résine polymère.

4. Matériau de protection anti-effluves selon l'une des revendications précédentes, dans lequel la matière de charge est présente à une concentration supérieure à 40 % en poids.

5. Matériau de protection anti-effluves selon l'une des revendications précédentes, dans lequel la matière de charge a une forme globulaire.

6. Matériau de protection anti-effluves selon l'une des revendications précédentes, qui est une partie d'un système de protection anti-effluves d'extrémité.

7. Machine électrique comprenant un système de protection anti-effluves, dans laquelle un matériau de protection anti-effluves selon l'une des revendications 1 à 6 est inclus dans le système de protection anti-effluves.

8. Machine électrique selon la revendication 7, qui est une machine à haute tension.

9. Machine électrique selon l'une des revendications 7 ou 8, qui comprend un système de protection anti-effluves pour éviter des décharges partielles, dans laquelle le système de protection anti-effluves comprend une répartition des potentiels intérieure et/ou une protection anti-effluves extérieure combinée à une protection anti-effluves d'extrémité.
